## Europäisches Patentamt
## European Patent Office
## Office européen des brevets

(19)

(11) Numéro de publication: **0 173 625**
**B1**

(12) ## FASCICULE DE BREVET EUROPÉEN

(45) Date de publication du fascicule du brevet:
**23.11.88**

(51) Int. Cl.⁴: **F 16 D 25/12,** F 16 D 25/08

(21) Numéro de dépôt: **85401661.5**

(22) Date de dépôt: **20.08.85**

(54) **Dispositif d'actionnement par commande de la pression d'un fluide avec compensation d'usure et correction de caractéristiques notamment pour mécanismes d'embrayages à friction.**

(30) Priorité: **28.08.84 FR 8413279**

(43) Date de publication de la demande:
**05.03.86 Bulletin 86/10**

(45) Mention de la délivrance du brevet:
**23.11.88 Bulletin 88/47**

(84) Etats contractants désignés:
**DE GB IT SE**

(56) Documents cité:
**DE-C-759 540**
**FR-A-2 003 456**
**FR-A-2 142 363**
**FR-A-2 483 022**

(73) Titulaire: **RENAULT VEHICULES INDUSTRIELS
Société dite:, 129 Rue Servient, F-69003 Lyon (FR)**

(72) Inventeur: **Sibeud, Jean-Paul, Chaponnay Quartier
Sous Vigne, F-69360 St. Symphorien d'Ozon (FR)**
Inventeur: **Ellenberger, Gérard, Les Charpes St.
Sorlin, F-69440 Mornant (FR)**

(74) Mandataire: **Chassagnon, Jean-Alain, REGIE
NATIONALE DES USINES RENAULT (S.0804),
F-92109 Boulogne-Billancourt Cedex (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

LIBER, STOCKHOLM 1988

## Description

L'invention concerne un dispositif d'actionnement par commande de la pression d'un fluide avec compensation d'usure, et correction de caractéristiques notamment pour mécanismes d'embrayages à friction du type comportant un cylindre dans lequel est disposé un premier piston prolongé par une tige de commande de débrayage et un deuxième piston en appui sur un ressort, et dans lequel l'espace compris entre les pistons est rempli d'un fluide incompressible. Dans un tel dispositif connu par la publication FR-A-2 142 363 on s'efforce de maintenir le contact permanent entre la tige de commande et le mécanisme de débrayage en autorisant une fuite de fluide correspondant à l'augmentation de la course du premier piston consécutive notamment à l'usure des garnitures de friction.

Des dispositifs de ce type doivent posséder une grande rapidité d'action et ne mettre en oeuvre qu'un minimum d'énergie de commande.

Une solution connue par la publication FR-A-2 003 456 consiste à intercaler une liaison hydraulique à soufflets entre la pédale de débrayage et le mécanisme de débrayage dont la canalisation est reliée à une réserve de fluide ajustable de façon à maintenir un volume d'huile constant dans la liaison notamment lors de l'usure des garnitures de frictions et lorsque le dispositif est inopérant.

Les dispositifs de ce type multiplient les sources de pression ce qui augmente leur hystérisis, et nécessitent une surveillance de bon fonctionnement accrue.

L'invention a pour objet un dispositif de compensation d'usure à fonctionnement automatique pendant les périodes d'inutilisation de l'embrayage qui fait application d'un moyen de calage hydraulique dans lequel les constituants de l'ensemble formé par ledit moyen de calage, le cylindre et les pistons n'ont pas de mouvements relatifs au cours du fonctionnement du dispositif d'actionnement.

Un autre objet de l'invention est un dispositif faisant application d'un servo-moteur à membrane divisant celui-ci en deux chambres dont la chambre de travail reçoit un fluide sous pression tandis que l'autre chambre porte un moyen variateur de la surface de travail de la membrane au cours du déplacement du dispositif d'actionnement dans le but d'obtenir un effort de commande de débrayage décroissant au cours du déplacement du mécanisme de commande d'une butée de débrayage.

Un troisième objet de l'invention est un dispositif qui avec une faible énergie de commande à temps de réponse rapide fait application d'un servo-moteur à faible course de déplacement sans ressort de correction et sans volume mort de la chambre de commmande.

Conformément à l'invention, les divers objectifs de l'invention sont atteints par les caractéristiques de la partie caractérisante de la revendication 1.

Le dipositif ainsi réalisé autorise sur l'effet d'une pression hydraulique ou pneumatique, l'actionnement rapide avec le minimum d'énergie nécessaire à la production de l'effort nécéssaire au déplacement de la membrane.

Le dispositif peut en outre être complété très simplement par un moyen d'adaptation de la surface utile de la membrane à l'effort de commande de l'embrayage réalisé soit sous le contrôle d'un système d'asservissement soit par l'intermédiaire d'une pédale conventionnelle.

Par l'absence de mouvement relatif des éléments du dispositif lors des déplacements de celui-ci dans le sens du débrayage, l'hystérisis d'ensemble est notablement réduit ce qui facilite son adaptabilité aux différents fluides de commandes et moyens d'asservissement.

D'autres avantages et caractéristiques de l'invention ressortiront de la description d'un mode de réalisation de celle-ci, faite en référence au dessin annexé dans lequel:

Les figures 1 et 2 représentent schématiquement en position embrayée un embrayage à disque respectivement à commande par levier et fourchette d'actionnement d'une butée de débrayage sur lesquels agit le dispositif d'actionnement conforme aux caractéristiques de l'invention.

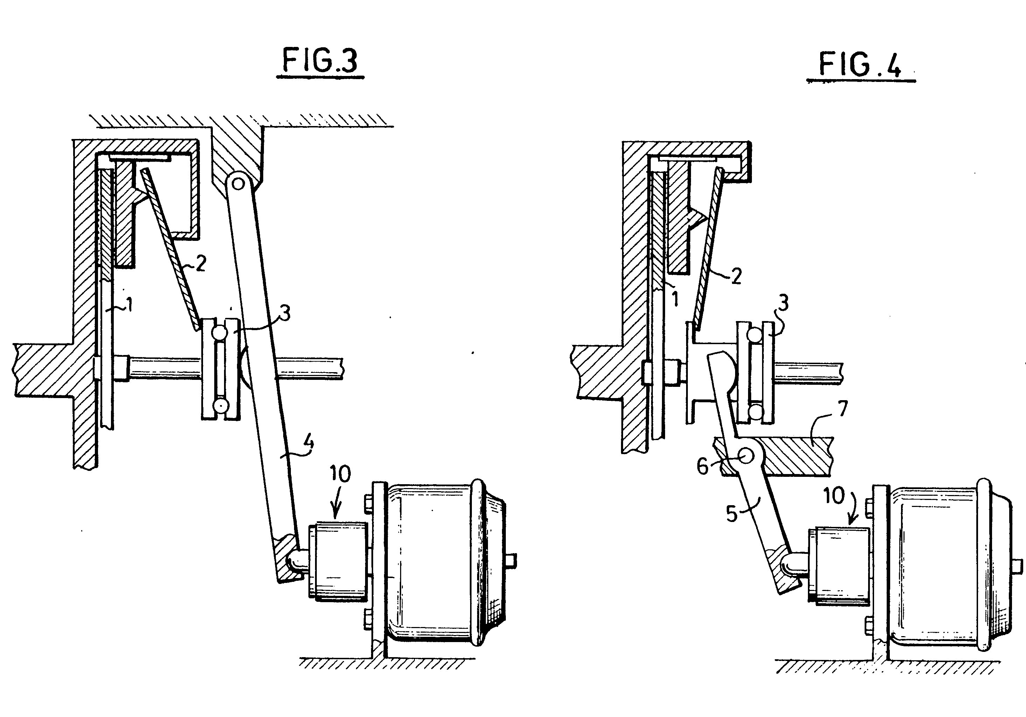

Les figures 3 et 4 représentent schématiquement l'embrayage précité à la suite du fonctionnement du dispositif compensateur d'usure du dispositif.

La figure 5 représente une coupe longitudinale du dispositif conforme à l'invention à l'état de repos.

La figure 6 représente la courbe caractéristique de fonctionnement du dispositif.

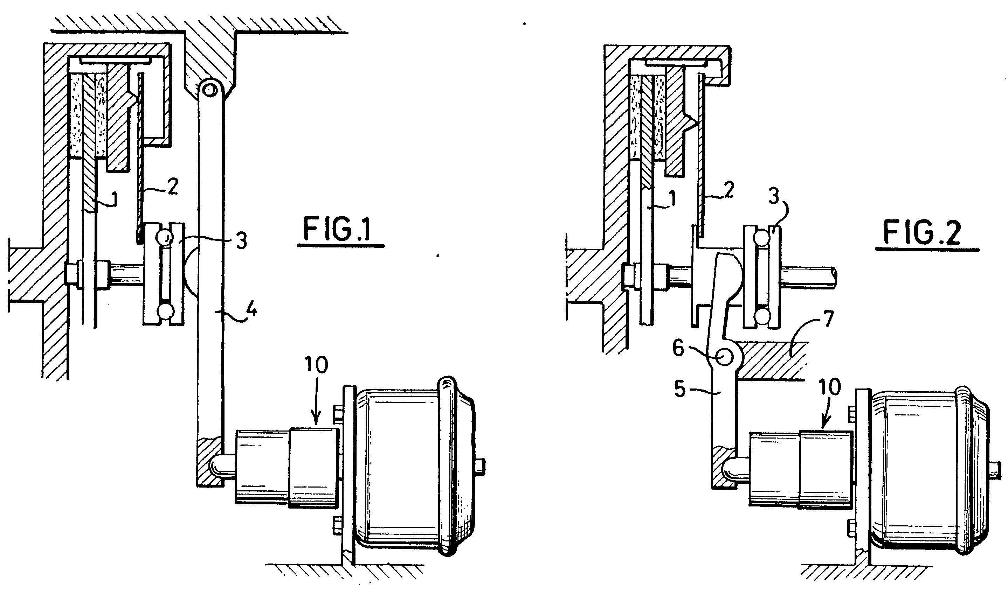

Les figures 1 et 2 montrent un embrayage à disque 1 à commande par diaphragme 2 actionné par une butée de débrayage 3 montée à déplacement axial sur un arbre d'embrayage sous l'action d' un levier 4 (figure 1) ou d'une fourchette 5 (figure 2) monté à pivotement en 6 sur un élément 7 du carter d'embrayage ou de la boîte de vitesses. Sur l'extrémité du levier 4 ou de la fourchette 5 agit le dispositif d'actionnement avec compensation d'usure désigné dans son ensemble par la référence 10.

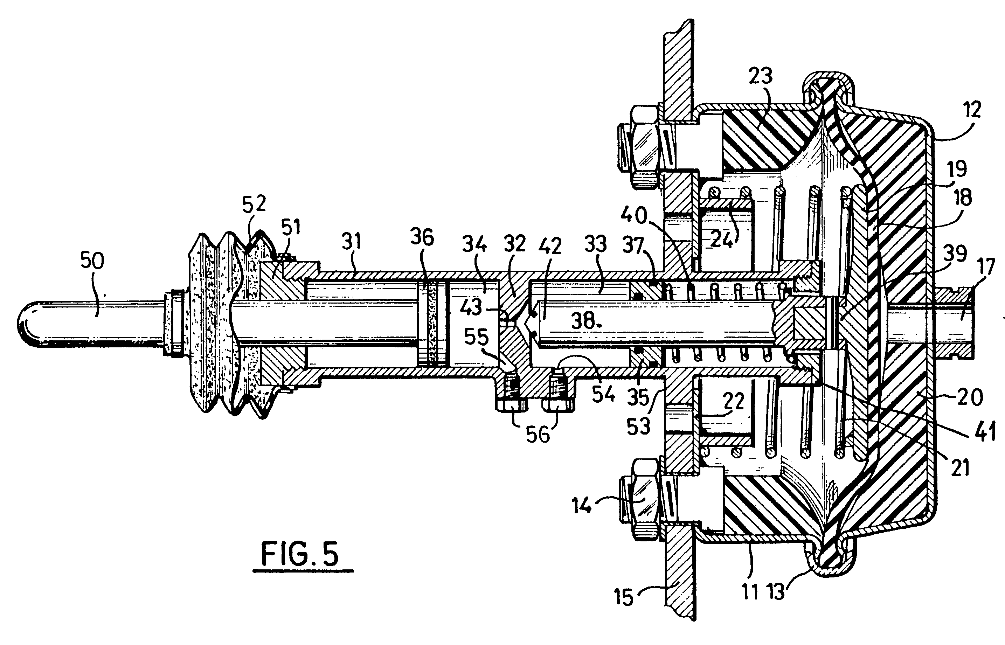

Le dispositif illustré plus en détail à la figure 5 est constitué par la combinaison de deux ensembles réalisant respectivement les fonctions d'actionnement et de compensation ou d'usure.

L'ensemble d'actionnement est constitué par un servo-moteur à membrane conventionel formé par deux coquilles 11, 12 en tôle emboutie assemblées à leur périphérie par une bride démontable 13 ou par tout autre moyen. La coquille 11 est fixée par des boulons 14 sur un support 15 lié au carter 7 de la boîte de vitesses ou d'embrayage que nous appellerons dans la suite de la description par "plan de référence fixe".

La coquille 12 faisant office de couvercle étanche est percée d'un orifice 17 d'amenée ou de départ du fluide de commande.

Une membrane 18 déformable et inextensible est serrée par sa périphérie entre les coquilles 11 - 12 et reçoit la pression du fluide de commande transformée en effort de commande de déplacement transmis à une coupelle 19 solidaire de la membrane 18.

Le fond de la coquille 12 porte une pièce moulée 20 traversée par l'orifice 17 qui constitue la butée de la membrane 18 et de la coupelle 19 en position de repos de la membrane dans le but de supprimer les zones necessitant un remplissage préalable à la transmission de la pression à la membrane.

Un ressort 21 disposé en com pression dans la coquille 11 entre le fond 22 de celle-ci et la coupelle 19 constitue le moyen de rappel de la membrane 18 au contact de la pièce moulée 20.

La paroi interne de la coquille 11 porte un moyen d'appui 23 qui assure l'appui partiel de la membrane 18. L'appui 23 possède une forme spéciale évasée, dont la surface convexe courbe est orientée vers la membrane 18, dans le but de constituer un appui progressif reducteur de la surface de la membrane soumise à la pression de commande.

Ainsi lorsque la pression dans l'orifice 17 et la coquille 12 est constante, la force de poussée de la membrane diminue proportionnellement à la surface active de celle-ci soumise à cette pression au fur et à mesure que le déplacement de la membrane augmente. On obtient ainsi consécutivement à l'un des objets de l'invention une fonction force/déplacement décroissante adaptée à chaque type d'embrayage par échange de l'appui 23.

Un manchon cylindrique 24 soudé sur le fond 22 de la coquille 11 constitue une butée de fin de course de la coupelle 19 et évite ainsi les contraintes excessives sur la membrane.

Dans le but de limiter les déformations axiales de la membrane 18 de part et d'autre du plan de fixation de celle-ci confondu avec le plan de jonction des coquilles 11, 12, les surfaces d'appui axial extrêmes de la membrane situées sur la pièce moulée 20 et sur le manchon 24 sont également distantes du plan de fixation de la membrane et de jonction des coquilles 11, 12.

Le moyen de compensation d'usure est constitué par un cylindre 31 qui porte une cloison de séparation 32 entre deux compartiments 33, 34. Chaque compartiment constitue le logement d'un piston 35, 36. Le piston 35 de forme annulaire est muni de deux joints toriques ou à lèvre 37 et est monté à coulissement axial étanche dans le compartiment 33 le long d'un axe 38 rigidement fixé au moyen d'une goupille à démontage rapide sur un téton 39 porté par la coupelle 19. Un ressort 40 est monté en compression entre une face du piston 35 non soumise à pression et un bouchon obturateur 41 du compartiment 33.

L'extrémité de l'axe 38 porte un clapet étanche 42 destiné à obturer un orifice 43 de faible diamètre percé dans la cloison 32 qui fait communiquer les compartiments 33, 34. L'orifice 43 porte le siège conique du clapet portant un joint d'étanchéité. Les déplacements du clapet 42 et de l'axe 38 sont limités entre deux butées constituées d'une part la partie évasée de l'orifice 43 formant siège du clapet 42 ou par la face de la cloison 32 tournée vers ce même clapet, et d'autre part parun épaulement de l'axe 38 venant en appui sur le bouchon 41.

Le piston 36 monté à coulissement axial étanche dans le compartiment 34 est prolongé axialement par une tige de commande 50 de débrayage qui s'étend au travers d'un autre bouchon obturateur 51 tandis qu'un soufflet protecteur extérieur 52 au cylindre 31, ensère la tige de commande 50 et est immobilisé sur le corps du cylindre 31.

Le cylindre 31 est par ailleurs muni d'une bride extérieure 53 qui constitue un épaulement destiné à prendre un appui de butée sur le fond 22 de la coquille 11 et par voie de conséquence sur le plan de référence fixe.

Le volume compris entre les pistons 35, 36 est rempli par un fluide incompressible qui occupé en fait les compartiments 33, 34 reliés entr'eux par l'orifice 43.

En outre deux trous 54, 55 obturés par des bouchons 56 débouchent dans les compartiments 33, 34 et assurent le remplisage ou la purge du fluide.

En cours de commande, le fluide de commande hydraulique ou pneumatique, à son arrivée dans le servo-moteur agit sur la membrane 18 et pousse la coupelle 19. Celle-ci pousse l'axe 38 dont le clapet 42 vient obturer l'orifice 43 tout en exerçant une poussée sur la cloison 32. La pression du fluide dans le compartiment 34, conditionnée par la poussée agissant sur la section du piston 36, tend à augmenter. Cela ne compromet pas l'étanchéité au niveau du clapet 42 de l'axe 38 car la surface du clapet en appui sur le siège de la cloison 32 est très inférieure à la surface du piston 36.

Sous la poussée du fluide de commande, tout le cylindre 31 se déplace, entraînant par l'intermédiaire du fluide hydraulique contenu dans le compartiment 34, la tige de commande 50 d'actionnement du mécanisme d'embrayage.

Consécutivement à un usage intensif de l'embrayage, l'usure des garnitures tend à modifier l'ouverture angulaire du diaphragme de l'embrayage, qui se traduit par une poussée sur la tige de commande 50 en direction du plan de référence 15. Cette poussée se transmet au fluide du compartiment 34 qui tend à vouloir passer par l'orifice 43 et à pousser la cloison 32 et donc le cylindre 31 vers le plan de référence, et ce, jusqu'à l'appui de la bride 53 sur ce plan.

Par ailleurs le ressort 21 du servo-moteur tend à décoller le clapet 42 de son siège et à ouvrir ainsi l'orifice 43.

Le fluide du compartiment 34, sous la poussée indirecte du diaphragme de l'embrayage et par l'intermédiaire du piston 36 passe ainsi dans le compartiment 33, repoussant le piston annulaire 35. Ce faisant, le transfert de fluide entre les compartiments 34, 33 se voit opposer la contrainte du ressort 40, mais le tarage de celui-ci est choisi bien inférieur à celui du diaphragme d'embrayage.

Le piston 36 progresse ainsi, au fur et à mesure de l'usure des garnitures et pendant les phases de repos de l'embrayage, vers le fond du compartiment 34 rattrapant progressivement la course d'usure. Le piston annulaire 35 recule vers le bouchon 41 conjointement avec le recul du piston 36.

Il y a lieu de noter que le ressort 40 autorise la dilatation du fluide contenu dans les compartiments 33, 34 au repos de l'actionneur sous l'effet de la chaleur. Il permet en outre de compenser sans risques d'introduction d'air, les fuites éventuelles de fluide au contact des portées des pistons 35, 36 de sorte que le volume de l'ensemble des compartiments 33, 34 demeure toujours rempli.

Mais le ressort 40 permet également de communiquer une pression hydraulique initiale dans les compartiments 33 et 34 de sorte que, compte tenu des sections utiles différentielles des pistons 35, 36 on obtienne une précontrainte sur la tige de commande 50 qui assure le contact permanent de la butée de débrayage 3 avec le diaphragme 2.

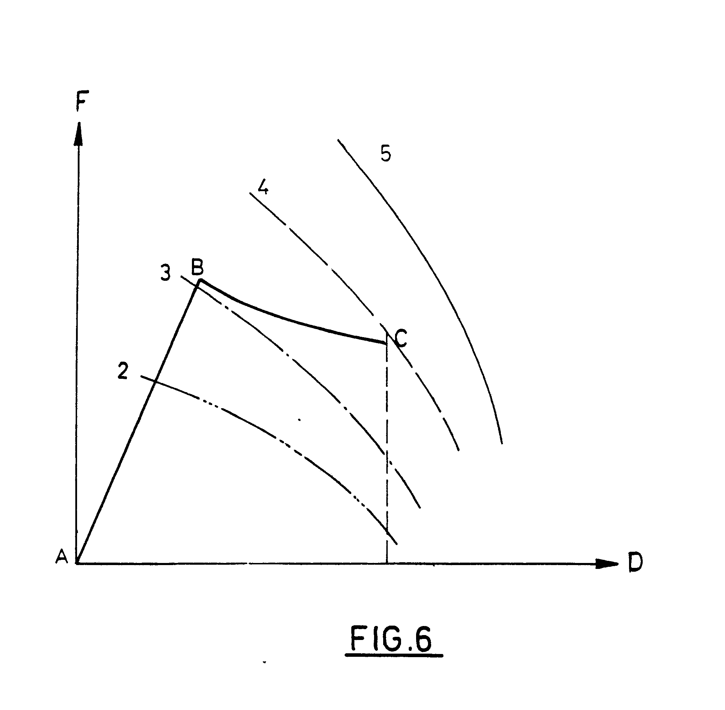

Le fonctionnement du dispositif est traduit sur la caractéristique représentée à la figure 6 sur laquelle l'effort de commande reçu sur la tige de commande 50 croit au début du débrayage selon la portion AB pour décroitre à partir du point de fonctionnement B sur la courbe isobare 3 à laquelle correspond la pression de commande, jusqu'au point C auquel correspond le parcours total de la course de débrayage mesurée sur la tige 50.

**Revendications**

1. Dispositif d'actionnement par commande de fluide avec compensation d'usure, notamment pour mécanismes d'embrayage à friction du type comportant un cylindre (31) dans lequel est disposé un premier piston (35) en appui sur un ressort (40) et un deuxième piston (36) prolongé par une tige de commande (50) de débrayage, et dans lequel l'espace compris entre les pistons (35, 36) est rempli d'un fluide incompressible, caractérisé par le fait que le cylindre (31) porte une cloison de séparation (32) entre deux compartiments (33, 34) qui logent respectivement le premier piston (35) et le deuxième piston (36) et qu'un orifice (43) de communication entre lesdits compartiments (33, 34) porté par la cloison (32) est associé à un clapet obturateur (42) rigidement relié à une membrane (18) soumise à une pression de commande et de transmission d'un effort de poussée sur le cylindre (31) et d'entraînement de la tige de commande (50); ladite membrane (18) étant en appui sur un élément élastique (21) monté en compression dans une chambre hors pression dont la paroi porte un moyen d'appui (23) partiel de la membrane (18) et qui exerce un effort dans le sens de l'ouverture du clapet (42); le moyen d'appui (23) possèdant une courbure de manière à permettre l'adaption d'une relation entre la pression de commande et le couple transmis par l'embrayage.

2. Dispositif selon la revendication 1, caractérisé par le fait que les aires des faces de commande des pistons (35, 36) sont différentes et que le premier piston (35) dont l'aire de commande est plus faible est monté à coulissement sur un axe (38) porteur du clapet obturateur (42) à l'encontre d'un ressort (40) monté en compression entre la face dudit piston (35) non sou mise à la pression de commande et le fond du cylindre (31).

3. Dispositif selon l'une quelconque des revendications 1 et 2, caractérisé par le fait que le plan de fixation de la membrane (18) est équidistant des deux butées (20, 24) de la membrane (18) respectivement portées par les coquilles (11, 12) constitutives d'un servo-moteur.

4. Dispositif selon l'une quelconque des revendications 1 à 3, caractérisé par le fait que le moyen d'appui (23) est interchangeable, dans le but d'une adaptation facile aux caractéristiques forces/déplacement de l'embrayage envisagé.

5. Dispositif selon l'une quelconque des revendications 1 à 4, caractérisé par le fait que l'une des butées (20) de la membrane (18) épouse la forme de ladite membrane (18) en l'absence de pression du fluide de commande, dans le but de réduire les espaces morts au minimum.

**Claims**

1. A fluid controlled actuating device with wear compensation, especially for friction clutch mechanisms, the actuating device, of the kind comprising a cylinder (31) in which is disposed a first piston (35) engaging on a spring (40) and a second piston (36) which is extended by a declutching control rod (50), and in which the space defined between the pistons (35, 36) is filled with an incompressible fluid, characterised by the fact that the cylinder (31) has a bulkhead (32) providing separation between two chambers (33, 34) in which the first piston (35) and the second piston (36) are respectively housed, and that a communicating orifice (43) between the said chambers (33, 34), carried by the bulkhead (32), is associated with an obturating valve (42) which is rigidly connected to a membrane (18), the membrane being subjected to a pressure for the control and transmission of a thrust force on the cylinder (31) and for movement of the control rod (50); the said membrane (18) being in engagement on a resilient element (21), which is mounted in compression in an unpressurised chamber the wall of which carries a support member (23) for partially supporting the membrane (18), the support member exerting a force in the direction of opening of the valve (42), and the support means being curved in such a way as to permit the relationship between the control pressure and the torque transmitted by the clutch to be modified.

2. A device according to Claim 1, characterised by the fact that the control surfaces of the pistons (35, 36) are of different cross sectional areas, and that the first piston (35) the said control surface cross sectional area of which is the smaller of the two, is slidably mounted on an axial rod (38) which carries the obturating valve (42) and acts against a spring (40), which is mounted in compression between that face of the said piston (35) which is not subjected to the control pressure and the base of the cylinder (31).

3. A device according to either one of Claims 1 and 2, characterised by the fact that the plane in which the membrane (18) is secured is equidistant from the two elements (20, 24) against which the membrane (18) abuts, the said elements being respectively carried by the shell members (11, 12) forming part of a servo motor.

4. A device according to any one of Claims 1 to 3, characterised by the fact that the support means (23) is interchangeable, with a view to easy adaptation to the force/displacement characteristics of the clutch concerned.

5. A device according to any one of Claims 1 to 4, characterised by the fact that one of the said elements (20) against which the membrane (18) engages conforms to the shape of the said membrane (18) when control fluid pressure is absent, whereby to reduce to a minimum the incidence of dead spaces.

**Patentansprüche**

1. Flüssigkeitsbetätigte Einrichtung mit Spielkompensierung, insbesondere für Reibungskupplungen, mit einem Zylinder (31), in dem ein erster Kolben (35) angeordnet ist, der sich auf einer Feder (40) abstützt und ein zweiter Kolben (36), der durch eine Kupplungsstange (50) verlängert ist und wobei der Raum zwischen den Kolben (35, 36) mit einer inkompressiblen Flüssigkeit gefüllt ist, dadurch gekennzeichnet, daß der Zylinder (31) eine Trennwand (32) zwischen zwei Abschnitten (33, 34) aufweist, in denen der erste Kolben (35) bzw. der zweite Kolben (36) enthalten sind und daß eine Verbindungsöffnung (43) zwischen den beiden Abschnitten (33, 34) in der Trennwand (32) vorgesehen ist, der ein Verschlußventil (42) zugeordnet ist, das fest mit einer Membran (18) verbunden ist, welche von einem Steuerdruck aufgrund der Beaufschlagung des Zylinders (31) und des Antriebs der Kupplungsstange (50) beaufschlagt wird, wobei sich die Membran (18) auf einem elastischen Teil (21) abstützt, das unter Druck in einer drucklosen Kammer angeordnet ist, deren Wand ein Teil (23) zum teilweisen Abstützen der Membran (18) aufweist, die eine Kraft in Richtung der Öffnung des Ventils (42) ausübt; das Stützteil (23) weist eine derartige Wölbung auf, daß das Verhältnis zwischen dem Steuerdruck und dem von der Kupplung stammenden Moment einstellbar ist.

2. Einrichtung nach Anspruch 1, dadurch gekennzeichnet, daß die Bereiche der Steuerflächen der Kolben (35, 36) unterschiedlich sind und daß der erste Kolben (35), dessen Steuerbereich kleiner ist, gleitend auf einer Achse (38) angeordnet ist, die das Verschlußventil (42) trägt, gegen die Wirkung einer Feder (40), die zwischen der Fläche des Kolbens (35), die nicht vom Steuerdruck beaufschlagt und dem Zylinderboden (31) unter Druck eingeklemmt ist.

3. Einrichtung nach einem der Ansprüche 1 und 2, dadurch gekennzeichnet, daß die Befestigungsebene der Membran (18) den gleichen Abstand von zwei Anschlägen (20, 24) für die Membran (18) aufweist, die von den einen Servomotor bildenden Schalen (11, 12) getragen werden.

4. Einrichtung nach einem der Ansprüche 1 bis 3, dadurch gekennzeichnet, daß das Stützteil (23) auswechselbar ist, um eine leichte Anpassung der Eigenschaften Kraft/Verschiebung der betrachteten Kupplung zu erzielen.

5. Einrichtung nach einem der Ansprüche 1 bis 4, dadurch gekennzeichnet, daß einer der Anschläge (20) der Membran (18) an die Form der Membran (18) angepaßt ist bei fehlendem Druck des Steuerfluids, um so die toten Räume auf eine Minimum zu beschränken.

FIG.2

FIG.1

FIG.3

FIG.4

0 173 625

FIG.5

FIG.6